# EUROPÄISCHE PATENTANMELDUNG

(11) **EP 4 528 999 A1**
(43) Veröffentlichungstag der Anmeldung: **26.03.2025**
(21) Anmeldenummer: 24198680.1
(22) Anmeldetag: 05.09.2024
(51) Int. Cl.: H02K 11/25, H02K 3/52, G01K 1/14, G01K 7/16

(54) **STATORANORDNUNG FÜR EINE ELEKTRISCHE MASCHINE UND VERFAHREN ZU DEREN HERSTELLUNG**

(30) Priorität: 20.09.2023 DE 102023125440
(71) Anmelder: ebm-papst Mulfingen GmbH & Co. KG, 74673 Mulfingen (DE)
(72) Erfinder: Braun, Martin, 74673 Mulfingen (DE); Trumpf, Nils, 74626 Bretzfeld-Schwabbach (DE)
(74) Vertreter: Rüger Abel Patentanwälte PartGmbB

(57) **Zusammenfassung**

Die Erfindung betrifft eine Statoranordnung (20) sowie ein Verfahren zu deren Herstellung. Die Statoranordnung (20) hat einen Statorkörper (32) mit einem Statorkern (21), der vollständig oder teilweise von einer elektrisch isolierenden Mantelschicht (31) umschlossen ist. Eine temperatursensitive Messleiterbahn (37) ist in oder auf der Mantelschicht angeordnet und integral mit der Mantelschicht (31) ausgeführt. Hierzu kann beispielsweise ein MID-Herstellungsverfahren verwendet werden. Die wenigstens eine temperatursensitive Messleiterbahn (37) hat einen temperaturabhängigen Widerstand (RT). Sie ist vorzugsweise an einer Messstelle (M) zwischen einem Zahn (23) des Statorkörpers (32) und einer auf den Zahn (23) aufgewickelten Statorwicklung (29) angeordnet.

## Beschreibung

Die Erfindung betrifft eine Statoranordnung für eine elektrische Maschine, insbesondere einen Elektromotor, sowie ein Verfahren zu deren Herstellung.

Aus WO 2020/167124 A1 ist ein Elektromotor bekannt, bei dem der ohmsche Wicklungswiderstand einer Statorwicklung ermittelt wird. Der Wicklungswiderstand kann dann beispielsweise bei der Ermittlung der Drehzahl des Elektromotors durch Messung des Motorstromes verwendet werden. Aus dem Wicklungswiderstand kann beispielsweise auch die Motortemperatur bestimmt werden, beispielsweise um den Elektromotor vor zu hohen Temperaturen zu schützen. Um den temperaturabhängigen Wicklungswiderstand zu ermitteln, wird ein Temperatursensor verwendet. Zusätzlich können ein Spannungssensor und ein Stromsensor vorhanden sein, wobei sämtliche Sensoren mit einer Auswerteeinheit kommunizieren, in der dann der temperaturabhängige Wicklungswiderstand ermittelt werden kann.

Ein Messverfahren zur Ermittlung des Motorwicklungswiderstandes ist außerdem in WO 2022/131455 A1 beschrieben. Anhand des ermittelten Wicklungswiderstandes kann dann die Wicklungstemperatur berechnet werden.

DE 10 2007 046 227 A1 offenbart einen Elektromotor. Die Statoranordnung ist zumindest teilweise mittels einer MID-Technologie (Molded Interconnected Devices). Dadurch soll es einfacher möglich sein, eine Anzahl von üblicherweise verwendeten Bauteilen, wie z.B. eine Ringplatine, eine Steuerelektronik, einen Sensorträger und eine Grundplatte des Elektromotors zu kombinieren, um die Montagekosten und die Herstellungskosten zu reduzieren. Die MID-Technik ist beispielsweise auch in EP 2 589 817 B1 zur Herstellung eines Gehäuseteils mit Leiterbahnen für ein Pumpenaggregat vorgeschlagen.

Ausgehend vom Stand der Technik kann es als Aufgabe der vorliegenden Erfindung angesehen werden, eine Statoranordnung zu schaffen, die eine akkurate Temperaturbestimmung ermöglicht und dabei gleichzeitig einfach und kostengünstig herzustellen ist.

Diese Aufgabe wird durch eine Statoranordnung mit den Merkmalen des Patentanspruches 1 sowie ein Verfahren mit den Merkmalen des Patentanspruches 14 gelöst.

Die Statoranordnung hat einen Statorkörper aufweisend einen Statorkern und eine den Statorkern teilweise oder vollständig umhüllende Mantelschicht. Der Statorkörper ist zum Anbringen wenigstens einer Statorwicklung eingerichtet. Hierzu kann der Statorkörper Zähne aufweisen, um die die Wicklungen gewickelt sind. Die Zähne sind in Umfangsrichtung durch Wicklungsnuten beabstandet.

Der Statorkern besteht aus elektrisch leitfähigem Material. Entlang einer Längsachse (die z.B. eine Drehachse eines Rotors definiert) kann der Statorkern durch einzelne elektrisch leitfähige Blechteile aufgebaut sein und deswegen als Statorpaket bezeichnet werden.

Auf dem Statorkern ist die Mantelschicht aufgebracht, die den Statorkern teilweise oder vollständig umschließt. Die Mantelschicht ist elektrisch isolierend. Die Mantelschicht ist insbesondere an den Zähnen vorhanden, um die Statorwicklungen gegenüber dem Statorkern elektrisch zu isolieren.

Die Statoranordnung hat außerdem eine Temperaturermittlungseinrichtung. Die Temperaturermittlungseinrichtung ist dazu eingerichtet, eine Temperatur am Statorkörper zu ermitteln. Insbesondere wird die Temperatur nicht direkt gemessen, sondern indirekt bestimmt basierend auf einem oder mehreren gemessenen oder anderweitig ermittelten elektrischen Parametern. Die Temperaturermittlungseinrichtung weist hierzu wenigstens einen Messschaltungszweig mit jeweils wenigstens einer Messleiterbahn auf. Jede Messleiterbahn hat einen temperaturabhängigen Widerstand. Dieser Widerstand kann eine NTC-Charakteristik (Heißleiter) oder eine PTC-Charakteristik (Kaltleiter) aufweisen. Dazu kann die wenigstens eine Messleiterbahn Material mit geeigneter Charakteristik aufweisen oder vorzugsweise ausschließlich aus einem solchen Material bestehen.

Bevorzugt sind in jedem Messschaltungszweig - abgesehen von der wenigstens einen Messleiterbahn - keine weiteren elektrischen und/oder elektronischen Bauteile vorhanden.

Die wenigstens eine Messleiterbahn ist auf oder in der Mantelschicht angeordnet. Sie ist insbesondere derart auf oder in die Mantelschicht integriert, dass ein Trennen der wenigstens einen Messleiterbahn von der Mantelschicht nicht zerstörungsfrei möglich ist. Die wenigstens eine Messleiterbahn und die Mantelschicht können sozusagen eine integrale Baueinheit sein.

Der wenigstens eine Messschaltungszweig kann elektrisch mit einer Auswerteeinheit der Temperaturermittlungseinrichtung verbunden sein. die Auswerteeinheit kann beispielsweise auf einem Träger (z.B. Leiterplatte) angeordnet und am Statorkörper befestigt sein. Auf dem Träger können auch weitete Steuerungskomponenten und/oder Schaltungsteile zur Steuerung des Betriebs einer elektrischen Maschine vorhanden sein, zu der die Statoranordnung gehört.

Die erfindungsgemäße Statoranordnung mit der Temperaturermittlungseinrichtung benötigt nur wenige Komponenten und kann als kompakte, hochintegrierte Statoranordnung realisiert werden. Die Herstellung der Mantelschicht und der wenigstens einen Messleiterbahn kann sehr wirtschaftlich erfolgen, beispielsweise durch ein MID-Verfahren, wie etwa ein Zweikomponentenspritzgussverfahren oder ein Laser-MID-Verfahren. Die Abkürzung MID steht für den englischen Begriff "Molded Interconnected Devices". Als Laser-MID-Verfahren kann beispielsweise eine Laser-Direkt-Strukturierung (LDS) oder eine subtraktive Laserstrukturierung angewandt werden.

Die wenigstens eine Messleiterbahn ist vorzugsweise im Bereich einer Stirnseite des Statorkörpers und/oder im Bereich einer Zahnflanke innerhalb der Wicklungsnut des Statorkörpers angeordnet. Die wenigstens eine Messleiterbahn ist insbesondere elektrisch vom Statorkern isoliert, vorzugsweise durch die Mantelschicht. Die Anzahl der Messleiterbahnen und somit die Anzahl der Messstellen, an denen am Statorkörper eine Temperatur mittels der Temperaturermittlungseinrichtung erfasst werden kann, kann beliebig gewählt auf einfache Weise variiert werden. Die Statoranordnung ist diesbezüglich sehr flexibel ausführbar. Daher bietet sich die Möglichkeit, die Temperatur an einer oder mehreren Statorwicklungen an einer Stelle unmittelbar benachbart zur Statorwicklung zu erfassen. Die Temperaturermittlung ist daher sehr exakt. Messfehler durch ungünstige oder fehlerhafte Positionen eines Temperatursensors (z.B. aufgrund eines Montagefehlers) können mit der vorliegenden Erfindung sehr einfach vermieden werden.

Die Temperaturermittlungseinrichtung ist insbesondere dazu eingerichtet, den sich an der wenigstens einen Messleiterbahn einstellenden Widerstandswert zu ermitteln, beispielsweise durch Anlegen einer eingeprägten Spannung an die wenigstens eine Messleiterbahn und durch Ermitteln des durch die wenigstens eine Messleiterbahn fließenden Stromes. Alternativ dazu kann die Temperaturermittlungseinrichtung auch dazu eingerichtet sein, einen Strom für die wenigstens eine Messleiterbahn einzuprägen und die sich an der Messleiterbahn ergebende Spannung zu ermitteln. Der Widerstandswert ergibt sich aus dem ohmschen Gesetz. Da die Temperaturabhängigkeit (Temperaturcharakteristik) des Widerstandes der wenigstens einen Messleiterbahn bekannt ist, kann basierend auf einer entsprechenden Zuordnung (Funktion, Tabelle, usw.) die Temperatur an der wenigstens einen Messleiterbahn ermittelt werden.

In dieser Anmeldung ist unter dem Begriff "Widerstand" ein ohmscher Widerstand zu verstehen, sofern nicht etwas anderes angegeben ist.

Wie vorstehend erwähnt, ist die wenigstens eine Messleiterbahn insbesondere unlösbar mit der Mantelschicht verbunden, vorzugsweise durch eine stoffschlüssige Verbindung. Es ist vorteilhaft, wenn die mechanische Verbindung zwischen der Mantelschicht und der wenigstens einen Messleiterbahn beim und durch das Herstellen der Mantelschicht und/oder beim und durch das Herstellen der wenigstens einen Messleiterbahn erzeugt wird. Beispielsweise kann die Mantelschicht eine Spritzgussschicht sein und die wenigstens eine Messleiterbahn kann - wie vorstehend erwähnt - basierend auf einer bekannten MID-Methode auf oder in der Mantelschicht hergestellt werden. Bei der Mantelschicht kann es sich um einen spritzgegossenen Leiterbahnträger handeln. Die wenigstens eine Messleiterbahn kann insbesondere während dem Herstellen der Mantelschicht oder im Anschluss durch einen zusätzlichen Prozess hergestellt werden.

Alle vorhandenen Messchaltungszweige und Messleiterbahnen befinden sich auf oder in der Mantelschicht. Die elektrische Verbindung zu einer Auswerteschaltung der Temperaturermittlungseinrichtung kann außerhalb oder auf oder in der Mantelschicht realisiert sein. Optional kann auch die Auswerteschaltung auf der Mantelschicht angeordnet sein. Die Mantelschicht ist in diesem Fall ein spritzgegossener Schaltungsträger.

Es ist vorteilhaft, wenn die Temperaturermittlungseinrichtung mehrere Messleiterbahnen aufweist, die räumlich mit Abstand zueinander an verschiedenen Messstellen am Statorkörper angeordnet sind. Dadurch lassen sich individuelle Temperaturwerte an mehreren Messstellen ermitteln oder es kann für die mehreren Messstellen ein Mittelwert der Temperatur ermittelt werden. Dies hängt beispielsweise davon ab, wie die mehreren Messleiterbahnen elektrisch miteinander verbunden sind. Eine individuelle Messstelle ist dabei insbesondere eine Position am Statorkörper, die eine individuellen Statorwicklung an einem Zahn zugeordnet ist, um deren Temperatur zu bestimmen.

Vorzugsweise kann die Temperaturermittlungseinrichtung wenigstens einen Messschaltungszweig aufweisen, wobei jeder Messschaltungszweig genau eine Messleiterbahn oder mehrere Messleiterbahnen aufweist. Für jeden Messschaltungszweig kann die Temperaturermittlungseinrichtung einen individuellen Parameter ermitteln, der eine Temperatur des Messschaltungszweiges beschreibt.

Jeder Messschaltungszweig kann genau einer Messstelle zugeordnet sein oder es können unterschiedliche Messleiterbahnen eines Messschaltungszweigs an räumlich mit Abstand angeordneten Messstellen angeordnet sein.

Bei allen Ausführungsformen kann es vorteilhaft sein, mehrere oder alle vorhandenen Messleiterbahnen zueinander in Reihe und/oder parallel zu schalten.

Jeder Messschaltungszweig hat zwei elektrische Anschlüsse, um den Messschaltungszweig elektrisch an eine Spannungsquelle und/oder Stromquelle anzuschließen. Einer dieser elektrischen Anschlüsse oder beide elektrischen Anschlüsse jedes Messschaltungszweiges sind vorzugsweise im Bereich einer Stirnseite des Statorkörpers angeordnet, um eine gute Position für das Anschließen der Auswerteeinheit der Temperaturermittlungseinrichtung zu gewährleisten. Dabei befinden sich alle Anschlüsse vorzugsweise an derselben Stirnseite. Ein Anschluss jedes Messschaltungszweiges kann an ein gemeinsames Bezugspotenzial, insbesondere Massepotenzial, angeschlossen sein und kann dazu optional mit einem leitenden Bestandteil der Statoranordnung verbunden sein, beispielsweise dem Statorkern. In diesem Fall ist ein Führen mit dem gemeinsamen Bezugspotenzial verbundenen Anschlusses des Messschaltungszweiges an die Stirnseite des Statorkörpers nicht erforderlich.

Bei einem bevorzugten Ausführungsbeispiel kann die Messleiterbahn oder zumindest eine der vorhandenen Messleiterbahnen an folgenden Positionen am Statorkörper angeordnet sein:
- Die betreffende Messleiterbahn kann nur im Bereich einer Stirnseite des Statorkörpers angeordnet sein;
- Die betreffende Messleiterbahn kann nur im Bereich einer Zahnflanke innerhalb einer Wicklungsnut des Statorkörpers angeordnet sein;
- Die betreffende Messleiterbahn kann im Bereich der beiden Zahnflanken eines gemeinsamen Zahns innerhalb der beiden benachbarten Wicklungsnuten des Statorkörpers angeordnet sein;
- Die Messleiterbahn kann sowohl mit einem Abschnitt entlang einer Zahnflanke innerhalb der Wicklungsnut, als auch mit einem anderen Abschnitt im Bereich der Stirnfläche des Statorkörpers angeordnet sein.

Die Geometrie und der Verlauf der wenigstens einen Messleiterbahn kann abhängig von der zu bestimmenden Temperatur definiert werden. Beispielsweise kann die Anordnung der wenigstens einen Messleiterbahn davon abhängig sein, ob die Temperatur an einer lokal begrenzten Position der Wicklung (z.B. Wicklungskopf) oder ein Temperaturmittelwert entlang eines längeren Abschnitts der Wicklung (z.B. innerhalb einer einzigen Wicklungsnut) oder entlang der gesamten Wicklung ermittelt werden soll.

Der Querschnitt jeder Messleiterbahn kann rund, beispielsweise kreisförmig, polygonal und beispielsweise rechteckig sein. Vorzugsweise ist die Querschnittsform einer Messleiterbahn konstant. Die Messleiterbahn kann entlang ihrer Erstreckung abschnittsweise gerade und/oder gekrümmt und/oder bogenförmig sein. Eine Messleiterbahn kann beispielsweise ein Polygonzug sein oder gerade Abschnitte aufweisen, die jeweils durch einen bogenförmigen oder kreisbogenförmigen Abschnitt miteinander verbunden sind.

Bei einem Ausführungsbeispiel kann die Messleiterbahn an der Messstelle einen mäandrierenden Verlauf und/oder zickzackförmigen Verlauf aufweisen. Dadurch besteht die Möglichkeit, die Messleiterbahn in Stromflussrichtung lang auszuführen bei gleichzeitig geringem Flächenbedarf. Insbesondere kann die Länge der Messleiterbahn in Stromflussrichtung an der Messstelle größer sein, als eine Außenumfangslinie, die die Messstelle definiert und begrenzt. Beispielsweise kann die Länge der Messleiterbahn an der Messstelle zumindest um den Faktor 3 bis 5 größer sein als die Länge der Außenumfangslinie, die die Messstelle definiert bzw. begrenzt.

Irgendein Ausführungsbeispiel der Statoranordnung kann wie folgt hergestellt werden:

Zunächst wird ein Statorkern bereitgestellt. Im Anschluss daran wird auf den Statorkern eine elektrisch isolierende Mantelschicht aufgebracht, vorzugsweise durch ein Spritzgussverfahren. Der Statorkern wird sozusagen teilweise oder vollständig umspritzt und bildet dadurch den Statorkörper.

Die Messleiterbahn wird entweder bereits beim Herstellen der Mantelschicht oder im Anschluss durch einen zusätzlichen Verfahrensschritt auf oder in der Mantelschicht hergestellt, so dass die Mantelschicht als Träger für die wenigstens eine Messleiterbahn dient. Insbesondere können die Mantelschicht und die wenigstens eine Messleiterbahn eine nicht zerstörungsfrei trennbare Einheit bilden.

Im Anschluss daran können die erforderlichen elektrischen Anschlüsse vorgenommen werden. Insbesondere wird die wenigstens eine Messleiterbahn elektrisch mit einer Auswerteeinheit der Temperaturermittlungseinrichtung verbunden. Abhängig davon, ob die Auswerteeinheit eine eingeprägte Spannung oder einen eingeprägten Strom bereitstellt, kann der jeweils andere Parameter (also der Strom bzw. die Spannung) gemessen oder anderweitig bestimmt und basierend auf dem ohmschen Gesetz der Widerstand der wenigstens einen Messleiterbahn ermittelt werden. Dieser Widerstand ist kennzeichnend für eine Temperatur an der Messstelle, an der die wenigstens eine Messleiterbahn angeordnet ist.

Vorteilhafte Ausgestaltungen der Erfindung ergeben sich aus den abhängigen Ansprüchen, der Beschreibung und der Zeichnung. Nachfolgend werden bevorzugte Ausführungsbeispiele der Erfindung anhand der beigefügten Zeichnung im Einzelnen erläutert. In der Zeichnung zeigen:
Figur 1 ein Ausführungsbeispiel einer Statoranordnung in einer perspektivischen Ansicht,
Figur 2 ein Ausführungsbeispiel eines Statorkerns für die Statoranordnung aus Figur 1 in einer perspektivischen Ansicht,
Figuren 3 bis 5 jeweils eine schematische Prinzipdarstellung für unterschiedliche Ausgestaltungen einer Messleiterbahn an einem Zahn des Statorkörpers aus Figur 2,
Figuren 6 und 7 jeweils eine Prinzipdarstellung im Querschnitt durch einen Bereich des Statorkörpers, in dem eine Messleiterbahn in oder an einer Mantelschicht am Statorkörper angeordnet ist,
Figur 8 einen Schaltplan eines Ausführungsbeispiels einer Temperaturermittlungseinrichtung der Statoranordnung aus Figur 1 und
Figuren 9 und 10 jeweils Prinzipdarstellungen für unterschiedliche Ausführungen von Messschaltungszweigen der Temperaturermittlungseinrichtung aus Figur 8.

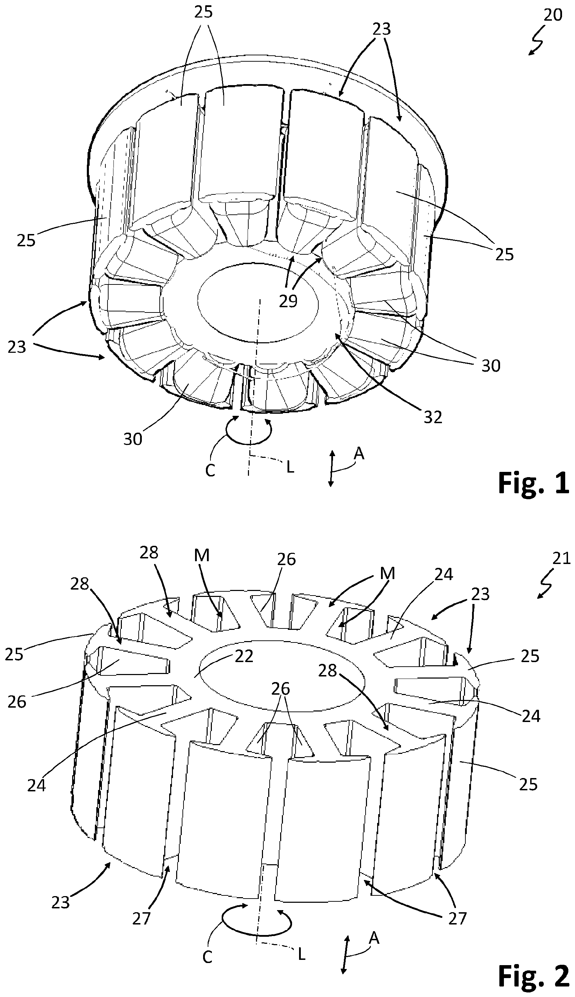

In Figur 1 ist ein Ausführungsbeispiel einer Statoranordnung 20 perspektivisch dargestellt. Die Statoranordnung 20 ist zur Verwendung in einer elektrischen Maschine vorgesehen, beispielsweise einem Elektromotor. Bei der in Figur 1 dargestellten Statoranordnung 20 ist der Rotor koaxial zur Statoranordnung außen angeordnet (Außenläufer). Alternativ hierzu könnte die Statoranordnung 20 auch für eine elektrische Maschine mit Innenläufer ausgebildet sein.

Die Statoranordnung 20 hat einen Statorkern 21, der in Figur 2 separat dargestellt ist. Der Statorkern 21 definiert eine Längsachse L, die bei der Verwendung in einer elektrischen Maschine die Drehachse des zugeordneten Rotors ist. Beim Ausführungsbeispiel hat der Statorkern 21 einen Ringteil 22, der die Längsachse L in einer Umfangsrichtung C ringförmig umschließt.

In der Umfangsrichtung C weist der Statorkern 21 gleichmäßig verteilt und mit Abstand zueinander angeordnete Zähne 23 auf, die sich beim Ausführungsbeispiel vom Ringteil 22 radial nach außen weg erstrecken. Die Zähne 23 weisen jeweils dieselbe Geometrie bzw. Form auf. Sie haben einen Zahnsteg 24 und einen Zahnkopf 25. Der Zahnsteg 24 verbindet den Zahnkopf 25 mit dem Ringteil 22. Die Zahnstege 24 haben beim Ausführungsbeispiel in Umfangsrichtung C eine geringere Dimension als die Zahnköpfe 25. Die Zahnköpfe 25 ragen in Umfangsrichtung C zu beiden Seiten hin vom Zahnsteg 24 weg. In einer Axialrichtung A parallel zur Längsachse L betrachtet hat jeder Zahn 23 dadurch eine T-förmige Gestalt. Jeder Zahnsteg 24 hat zwei Zahnflanken 26, die als ebene Flächen ausgeführt sein können. Die Zahnflanken 26 sind beispielsgemäß in einer Ebene angeordnet, die durch die Axialrichtung A und eine rechtwinklig zur Axialrichtung A verlaufende Richtung definiert ist.

Zwei Zahnflanken 26 von in Umfangsrichtung C unmittelbar benachbarten Zähnen 23 sind einer gemeinsamen zwischen diesen benachbarten Zähnen 23 angeordneten Wicklungsnut 27 zugewandt.

In Axialrichtung A hat jeder Zahn 23 zwei Stirnflächen 28. Die Stirnflächen 28 sind beim Ausführungsbeispiel jeweils in einer Ebene angeordnet, die rechtwinklig zur Längsachse L ausgerichtet ist.

Der Statorkern 21 kann aus einer Mehrzahl von Statorblechen gebildet sein, die in Axialrichtung A aufeinandergestapelt sind und jeweils dieselbe Außenkontur aufweisen. Der Statorkern 21 kann deswegen auch als Statorpaket bezeichnet werden. Die aufeinandergestapelten Statorbleche sind voneinander elektrisch isoliert, um eine Wirbelstrombildung zu reduzieren.

Jeder Zahn 23 des Statorkerns 21 dient zum Anordnen einer Statorwicklung 29 (Figur 1). Die Statorwicklungen 29 sind um einen zugeordneten Zahnsteg 24 herumgewickelt. Jede Statorwicklung 29 erstreckt sich somit abschnittsweise in zwei in Umfangsrichtung C unmittelbar benachbarten Wicklungsnuten 27 und ragt an den Stirnseiten über die Stirnfläche 28 hinaus und bildet dort jeweils einen Wicklungskopf 30. In Figur 1 ist von den Statorwicklungen 29 im Wesentlichen der Wicklungskopf 30 zu sehen.

Die Statorwicklungen 29 können abhängig von der Ausgestaltung der Statoranordnung 20 elektrisch in Reihe und/oder parallelgeschaltet werden, abhängig von der Anordnung und Anzahl der Stränge der Statoranordnung. Beispielsweise können jeweils vier Statorwicklungen 29 elektrisch zu jeweils einem Strang verbunden sein.

Der Statorkern 21 ist teilweise oder vollständig mit einer isolierenden Mantelschicht 31 beschichtet und bildet gemeinsam mit der Mantelschicht 31 einen Statorkörper 32 (Figur 1). Die Mantelschicht 31 kann zusammenhängend sein oder auch mehrere voneinander räumlich getrennte Bereiche aufweisen. Die Mantelschicht 31 kann vorzugsweise durch ein Spritzgussverfahren auf den Statorkern 21 aufgebracht werden. Die Mantelschicht 31 ist insbesondere dazu eingerichtet, den Statorkern 21 elektrisch von den Statorwicklungen 29 zu isolieren.

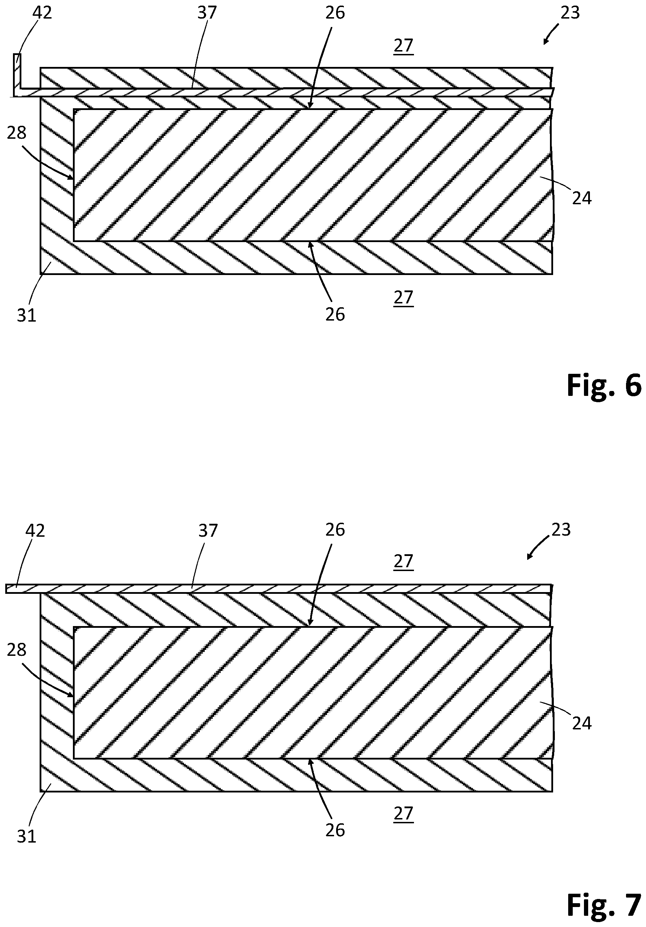

Die Mantelschicht 31 ist in den Figuren 6 und 7 schematisch dargestellt. Die Figuren 6 und 7 zeigen beispielhaft und ausschnittsweise eine Schnittebene durch einen Zahn 23, beispielsweise den Zahnsteg 24, auf den die isolierende Mantelschicht 31 außen aufgebracht ist.

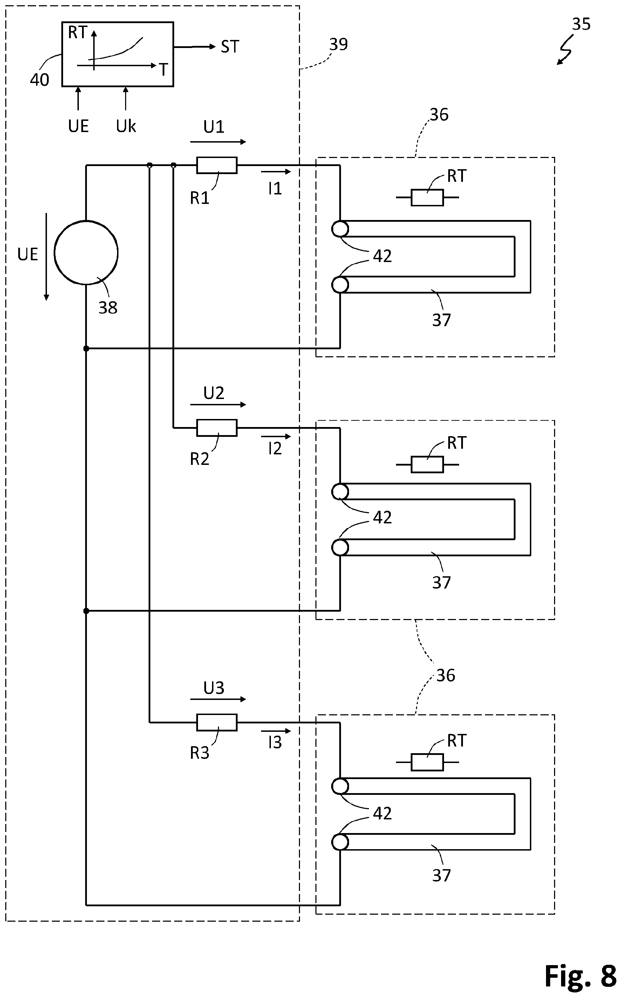

Die Statoranordnung 20 hat eine Temperaturermittlungseinrichtung 35 (Figur 8), die dazu eingerichtet ist, einen oder mehrere Temperaturwerte zu ermitteln, wobei jeder Temperaturwert eine Temperatur T an einer oder mehreren Messstellen M (Figur 2) der Statoranordnung 20 beschreibt.

Jede Messstelle M ist an einem Zahn 23 angeordnet. Die Messstelle M kann an der Stirnseite im Bereich der Stirnfläche 28 oder in der Wicklungsnut 27 im Bereich einer Zahnflanke 26 positioniert sein. Die Anzahl der Messstellen M ist beliebig. Abhängig von der Ausgestaltung der Temperaturermittlungseinrichtung 35 kann für jede Messstelle M ein individueller Temperaturwert der Temperatur T ermittelt werden oder es kann für mehrere Messstellen M ein Temperaturwert ermittelt werden, der einen statistischen Wert an den Messstellen M beschreibt, wie etwa eine Durchschnittstemperatur.

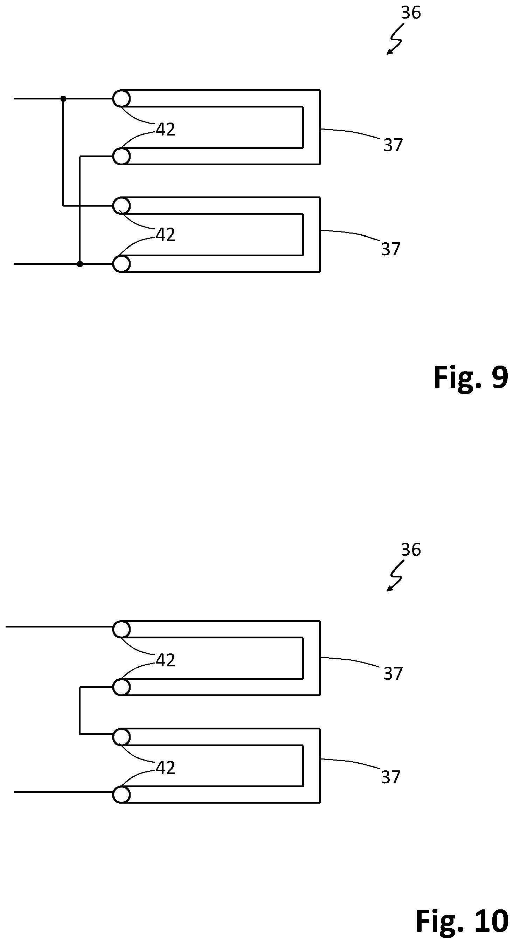

Die Temperaturermittlungseinrichtung 35 hat einen oder mehrere Messschaltungszweige 36 (Figur 8). Jeder Messschaltungszweig 36 weist zumindest eine Messleiterbahn 37 auf. Bei dem in Figur 8 dargestellten Ausführungsbeispiel hat jeder Messschaltungszweig 36 genau eine Messleiterbahn 37. Es können in jedem Messschaltungszweig 36 auch mehrere Messleiterbahnen 37 vorhanden sein, wie es in den Figuren 9 und 10 gezeigt ist. Die Messleiterbahnen 37 können in Parallelschaltung (Figur 9) oder in Reihenschaltung (Figur 10) elektrisch miteinander verbunden sein.

Jede Messleiterbahn 37 weist einen temperaturabhängigen Widerstand RT auf. Hierzu kann die Messleiterbahn 37 geeignetes Material aufweisen oder aus einem geeigneten Material bestehen. Beispielsweise können Materialien, wie Platin, Nickel, metallische Legierungen oder Silizium verwendet werden. Der temperaturabhängige Widerstand RT kann einen positiven Temperaturkoeffizienten (PTC) oder einen negativen Temperaturkoeffizienten (NTC) aufweisen und somit als Kaltleiter oder Heißleiter ausgeführt sein. Beim Ausführungsbeispiel haben sämtliche Messleiterbahnen 37 dieselbe Charakteristik und können insbesondere aus demselben Material bestehen. Alternativ hierzu ist es möglich, mehrere Messleiterbahnen 37 aus unterschiedlichen Materialien herzustellen und/oder mit unterschiedlichen Temperatur-Widerstand-Charakteristiken auszuführen.

Bei dem in Figur 8 gezeigten Ausführungsbeispiel der Temperaturermittlungseinrichtung 35 sind beispielhaft drei Messschaltungszweige 36 dargestellt. Die Anzahl der Messschaltungszweige 36 kann abweichend hiervon größer oder kleiner sein. Vorzugsweise ist jeder Messschaltungszweig 36 genau einer Messstelle M am Statorkörper 32 zugeordnet. Die wenigstens eine Messleiterbahn 37 des Messschaltungszweiges 36 ist daher an der zugeordneten Messstelle M positioniert.

Eine individuelle Messstelle M kann beispielsweise ein individueller Zahn 23 oder auch nur ein Teilbereich eines einzigen Zahns 23 sein, wie beispielsweise eine der Zahnflanken 26 oder die Stirnfläche 28 eines Zahns 23. Vorzugsweise ist eine individuelle Messstelle M genau einer Statorwicklung 29 zugeordnet, die an einem individuellen Zahn 23 des Statorkörpers 32 angeordnet ist.

Die Temperaturermittlungseinrichtung 35 ist bei dem in Figur 8 veranschaulichten Ausführungsbeispiel dazu eingerichtet, an jeden Messschaltungszweig 36 eine Eingangsspannung UE (eingeprägte Spannung) anzulegen. Dazu können die Messschaltungszweige 36 parallel zueinander an eine Eingangsspannungsquelle 38 einer Auswerteeinheit 39 angeschlossen sein.

In Reihe zu jedem Messschaltungszweig 36 kann ein Messwiderstand Rk der Auswerteeinheit 39 geschaltet sein, an dem eine Spannung Uk anliegt, die einen durch den jeweiligen Messschaltungszweig 36 fließenden Strom Ik charakterisiert, wobei k = 1, 2, 3, usw. ein Index ist entsprechend der Anzahl der vorhandenen Messschaltungszweige 36.

Für die beispielhaft dargestellten Messschaltungszweige 36 in Figur 8 weist die Auswerteeinheit 39 somit ein erster Messwiderstand R1, ein zweiter Messwiderstand R2 und ein dritter Messwiderstand R3 vorhanden, die jeweils in Reihe zu einem zugeordneten Messschaltungszweig 36 geschaltet sind. Die Messwiderstände R1, R2, R3 sind jeweils mit der Eingangsspannungsquelle 38 verbunden. Am ersten Messwiderstand R1 liegt eine erste Spannung U1 an, die einen ersten Strom I1 durch den ersten Messwiderstand R1 beschreibt. Analog hierzu liegt am zweiten Messwiderstand R2 eine zweite Spannung U2 an, die einen zweiten Strom I2 durch den zweiten Messwiderstand R2 beschreibt. Analog hierzu liegt an dem dritten Messwiderstand R3 eine dritte Spannung U3 an, die einen dritten Strom I3 durch den dritten Messwiderstand R3 beschreibt.

Die Eingangsspannung UE ist bekannt. Durch das Ermitteln der Ströme 11, I2, I3 bzw. der die Ströme charakterisierenden Spannungen U1, U2, U3 kann in der Auswerteeinheit 39 der Temperaturermittlungseinrichtung 35 ein Temperaturwert WT ermittelt werden, der charakteristisch ist für eine Temperatur T der Statoranordnung 20 am jeweiligen Messschaltungszweig 36. Hierzu kann in der Auswerteeinheit 39 basierend auf dem ohmschen Gesetz der Wert des temperaturabhängigen Widerstands RT ermittelt und dann aus dem bekannten Zusammenhang zwischen der Temperatur und dem temperaturabhängigen Widerstand RT der Messleiterbahn 37 die zu dem Wert des temperaturabhängigen Widerstands RT gehörende Temperatur T ermittelt werden. Dazu kann die Auswerteeinheit 39 ein diese Temperatur T kennzeichnenden Temperatursignal ST generieren. Das Temperatursignal ST kann weiterverarbeitet oder an eine Bedienschnittstelle (z.B. Anzeige) übermittelt und einer Bedienperson angezeigt oder auf andere Art verwendet und/oder weiterverarbeitet werden. Beispielsweise kann die Temperatur der Statoranordnung 20 überwacht und bei Überschreiten eines Temperaturgrenzwertes eine Warnung erzeugt werden. Es können auch Maßnahmen zur Minderung der Temperatur eingeleitet werden.

Um die Temperatur T zu bestimmen und/oder das Temperatursignal ST zu erzeugen kann die Auswerteeinheit 39 ein Modul 40 aufweisen, das dazu eingerichtet ist, basierend auf dem bekannten Zusammenhang zwischen der Eingangsspannung UE und einem den Strom Ik kennzeichnenden Parameter (z.B. Spannung Uk) die Temperatur T zu ermitteln. Dazu kann das Modul 40 eine Funktion, eine Nachschlagetabelle, eine Kennlinie, ein Kennfeld oder ähnliches aufweisen. Das Modul kann insbesondere eine Recheneinrichtung (beispielsweise einen Mikroprozessor) und optional einen Datenspeicher aufweisen.

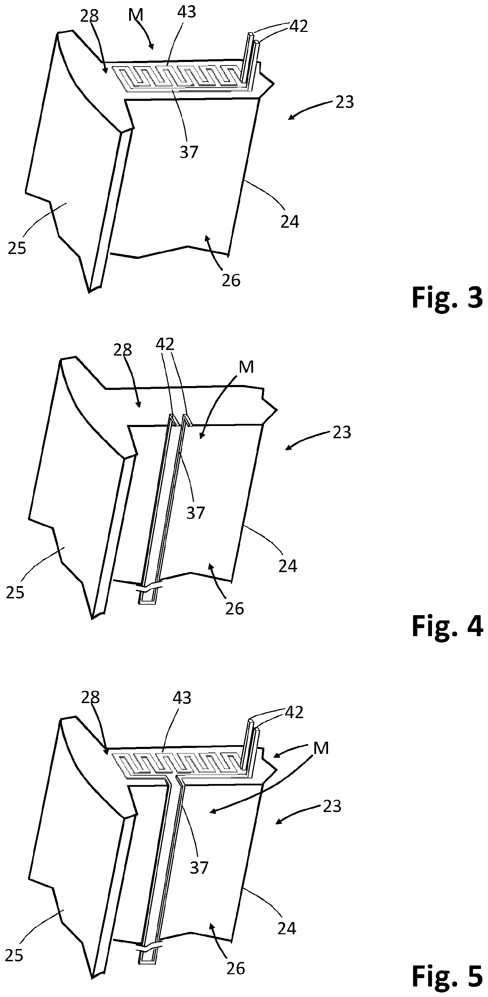

In den Figuren 3 bis 5 ist schematisch jeweils die Anordnung einer Messleiterbahn 37 an einer Messstelle M dargestellt. Bei dem in Figur 3 dargestellten Ausführungsbeispiel ist eine Messleiterbahn 37 an einer Messstelle M im Bereich einer Stirnfläche 28 eines Zahns 23 angeordnet. Figur 4 zeigt ein Ausführungsbeispiel einer Messleiterbahn 37, die im Bereich einer Zahnflanke 26 eines Zahns 23 angeordnet ist. In Figur 5 ist sozusagen eine Kombination der Ausführungsformen gemäß der Figuren 3 und 4 gezeigt, wobei die Messleiterbahn 37 einen Leiterbahnabschnitt im Bereich der Stirnfläche 28 und einen Leiterbahnabschnitt im Bereich der Zahnflanke 26 des Zahns 23. Bei allen in den Figuren 3 bis5 dargestellten Ausführungsbeispielen hat jede Messleiterbahn 37 zwei elektrische Anschlüsse 42, die im Bereich der Stirnfläche 28 des Zahns 23 angeordnet sind. Dies gestattet eine einfache elektrische Verbindung der jeweiligen Messleiterbahn 37 in der Temperaturermittlungseinrichtung 35.

Bei den in Figuren 3 bis 5 veranschaulichten Ausführungsbeispielen hat jede Messleiterbahn 37 mehrere geradlinige Abschnitte oder Schenkel, die sich aneinander anschließen. Im Verbindungsbereich zwei unmittelbar miteinander verbundener Schenkel oder Abschnitte bildet die Messleiterbahn 37 einen Knick. Der Knick hat bei den dargestellten Ausführungsbeispielen jeweils einen Betrag von 90°. Zusätzlich oder alternativ zu den veranschaulichten Ausführungsbeispielen könnte jede Messleiterbahn 37 auch abschnittsweise bogenförmig oder gekrümmt sein. Beispielsweise könnten die Knicke auch durch Bögen, insbesondere Kreisbögen ersetzt werden, die jeweils zwei geradlinig verlaufende Abschnitte miteinander verbinden. Die Geometrie oder der Verlauf jeder Messleiterbahn 37 zwischen den Anschlüssen 42 kann generell beliebig gewählt werden.

Ein sehr einfaches Beispiel einer Messleiterbahn 37 ist in Figur 4 dargestellt. Die Messleiterbahn 37 hat hier zwei parallel zueinander verlaufende Abschnitte oder Schenkel, die einerseits mit einem zugeordneten elektrischen Anschluss 42 und andererseits mit einem weiteren Abschnitt oder Schenkel verbunden sind. Die Messleiterbahn 37 ist sozusagen U-förmig.

Um angesichts der verfügbaren Fläche an einer individuellen Messstelle M eine ausreichende Leitungslänge in Richtung des Stromflusses zwischen den beiden Anschlüssen 42 zu erreichen, kann die Messleiterbahn 37 beispielsweise einen mäanderförmigen Leiterbahnabschnitt 43 aufweisen, wie es beispielhaft in den Figuren 3 und 5 gezeigt ist. Der mäanderförmige Leiterbahnabschnitt 43 ist hier im Bereich der Stirnfläche 28 des Zahns 23 angeordnet. Zusätzlich oder alternativ könnte ein mäanderförmige Leiterbahnabschnitt 43 auch an einer Zahnflanke 26 angeordnet sein. Die Länge des mäanderförmigen Leiterbahnabschnitts 43 in Stromflussrichtung ist deutlich länger, als die Länge der die Messstelle M umgebenden Außenkontur, die um den mäanderförmigen Leiterbahnabschnitt 43 herum verläuft. Dadurch kann die wirksame Leitungslänge der Messleiterbahn 37 an der Messstelle M sehr groß sein, auch wenn die Länge und Breite der Messstelle M (Außenkontor) klein sind. Dies erlaubt eine größere Flexibilität bei der Dimensionierung des temperaturabhängigen Widerstands RT und/oder der Materialauswahl der Messleiterbahn 37.

Jede Messleiterbahn 37 ist auf der Mantelschicht 31 angeordnet (Figur 7) oder in der Mantelschicht 31 angeordnet (Figur 6). Die wenigstens eine Messleiterbahn 37 ist integraler Bestandteil der Mantelschicht 31 und kann nicht zerstörungsfrei von der Mantelschicht 31 getrennt werden. Die wenigstens eine Messleiterbahn 37 wird bei ihrer Herstellung oder bei der Herstellung der Mantelschicht 31 stoffschlüssig mit der Mantelschicht 31 verbunden. Vorzugsweise wird ein MID-Herstellungsverfahren zur Herstellung der Mantelschicht 31 mit der wenigstens einen Messleiterbahn 37 verwendet. Die Abkürzung "MID" steht dabei für den englischen Begriff "Molded Interconnected Devices". Es können dabei Verfahren, wie ein Zweikomponenten-Spritzgussverfahren, ein Laser-MID-Verfahren oder ein anderes bekanntes MID-Verfahren verwendet werden.

Bei dem hier veranschaulichten Ausführungsbeispiel ist die Mantelschicht 31 durch ein Spritzgussverfahren hergestellt und bildet somit eine Spritzgussschicht. Die Mantelschicht 31 stellt einen spritzgegossenen Träger für die wenigstens eine Messleiterbahn 37 dar. Zusätzlich oder alternativ können auch andere Komponenten der Temperaturermittlungseinrichtung 35 in die Mantelschicht 31 integriert werden, analog zur wenigstens einen Messleiterbahn 37.

Abhängig von der gewählten MID-Technologie kann die wenigstens eine Messleiterbahn 37 im Anschluss an das Spritzgießen der Mantelschicht 31 beispielsweise durch Belichtung mit einem Laser und anschließendes Metallisieren auf der Oberfläche der Mantelschicht 31 erzeugt werden (Figur 7). Es ist alternativ hierzu auch möglich, die wenigstens eine Messleiterbahn 37 bereits bei der Herstellung der Mantelschicht 31 zu erzeugen, beispielsweise durch ein Zweikomponenten- bzw. Mehrkomponenten-Spritzgussverfahren (Figur 6).

Bei allen Ausführungsbeispielen ist die wenigstens eine temperatursensitive Messleiterbahn 37, die sozusagen einen Temperatursensor darstellt, kein eigenständiges individuelles Bauteil, sondern raumsparend integriert mit der Mantelschicht 31 realisiert. Die wenigstens eine Messleiterbahn 37 erhält dadurch eine hohe Positioniergenauigkeit. Fehlpositionierungen werden vermieden oder zumindest reduziert. Die wenigstens eine Messleiterbahn 37 kann insbesondere in oder auf der Mantelschicht 31 unmittelbar benachbart zur umgebenden Statorwicklung 29 angeordnet sein, so dass sich die Temperatur der umgebenden Statorwicklung 29 sehr genau erfassen lässt.

Die Erfindung betrifft eine Statoranordnung 20 sowie ein Verfahren zu deren Herstellung. Die Statoranordnung 20 hat einen Statorkörper 32 mit einem Statorkern 21, der vollständig oder teilweise von einer elektrisch isolierenden Mantelschicht 31 umschlossen ist. Eine temperatursensitive Messleiterbahn 37 ist in oder auf der Mantelschicht angeordnet und integral mit der Mantelschicht 31 ausgeführt. Hierzu kann beispielsweise ein MID-Herstellungsverfahren verwendet werden. Die wenigstens eine temperatursensitive Messleiterbahn 37 hat einen temperaturabhängigen Widerstand RT. Sie ist vorzugsweise an einer Messstelle M zwischen einem Zahn 23 des Statorkörpers 32 und einer auf den Zahn 23 aufgewickelten Statorwicklung 29 angeordnet.

### Bezugszeichenliste:

- 20: Statoranordnung
- 21: Statorkern
- 22: Ringteil
- 23: Zahn
- 24: Zahnsteg
- 25: Zahnkopf
- 26: Zahnflanke
- 27: Wicklungsnut
- 28: Stirnfläche
- 29: Statorwicklung
- 30: Wicklungskopf
- 31: Mantelschicht
- 32: Statorkörper

- 35: Temperaturermittlungseinrichtung
- 36: Messschaltungszweig
- 37: Messleiterbahn
- 38: Eingangsspannungsquelle
- 39: Auswerteeinheit
- 40: Modul

- 42: elektrischer Anschluss
- 43: mäanderförmiger Leiterbahnabschnitt

- A: Axialrichtung
- C: Umfangsrichtung
- I1: erster Strom
- I2: zweiter Strom
- I3: dritter Strom
- L: Längsachse
- M: Messstelle
- R1: erster Messwiderstand
- R2: zweiter Messwiderstand
- R3: dritter Messwiderstand
- RT: temperaturabhängige Widerstand
- ST: Temperatursignal
- T: Temperatur
- UE: Eingangsspannung
- U1: erste Spannung
- U2: zweite Spannung
- U3: dritte Spannung

## Patentansprüche

1. Statoranordnung (20) für eine elektrische Maschine aufweisend:
- einen Statorkörper (32) mit einem Statorkern (21), wobei der Statorkörper (32) zum Anbringen wenigstens einer Statorwicklung (29) eingerichtet ist,
- eine elektrisch isolierende Mantelschicht (31), die den Statorkern (21) des Statorkörpers (32) teilweise oder vollständig umschließt,
- eine Temperaturermittlungseinrichtung (35), die wenigstens eine Messleiterbahn (37) mit einem temperaturabhängigen Widerstand (RT) aufweist, wobei die wenigstens eine Messleiterbahn (37) auf oder in der Mantelschicht (31) angeordnet ist.

2. Statoranordnung nach Anspruch 1, wobei die wenigstens eine Messleiterbahn (37) und die Mantelschicht (31) eine integrale Baueinheit sind.

3. Statoranordnung nach Anspruch 1 oder 2, wobei die wenigstens eine Messleiterbahn (37) unlösbar mit der Mantelschicht (31) verbunden ist.

4. Statoranordnung nach einem der vorhergehenden Ansprüche, wobei eine mechanische Verbindung zwischen der Mantelschicht (31) und der wenigstens einen Messleiterbahn (37) durch das Herstellen der Mantelschicht (31) und/oder der wenigstens einen Messleiterbahn (37) hergestellt wird.

5. Statoranordnung nach Anspruch 4, wobei die Mantelschicht (31) eine Spritzgussschicht ist.

6. Statoranordnung nach einem der vorhergehenden Ansprüche, wobei die Temperaturermittlungseinrichtung (35) mehrere Messleiterbahnen (37) aufweist, die räumlich mit Abstand zueinander an verschiedenen Messstellen (M) am Statorkörper (32) angeordnet sind.

7. Statoranordnung nach einem der vorhergehenden Ansprüche, wobei die Temperaturermittlungseinrichtung (35) wenigstens einen Messschaltungszweig (36) aufweist, der eine Messleiterbahn (37) oder mehrere Messleiterbahnen (37) aufweist, und wobei die Temperaturermittlungseinrichtung (35) dazu eingerichtet ist, für jeden Messschaltungszweig (36) jeweils einen Messparameter bereitzustellen, der eine Temperatur (T) des Messschaltungszweigs (36) beschreibt.

8. Statoranordnung nach Anspruch 6 und 7, wobei an zumindest zwei verschiedenen Messstellen (M) jeweils ein Messschaltungszweig (36) angeordnet ist.

9. Statoranordnung nach Anspruch 6 und 7 oder nach Anspruch 8, wobei der Messschaltungszweig (36) oder einer der vorhandenen Messschaltungszweige (36) mehrere Messleiterbahnen (37) aufweist, die an verschiedenen Messstellen (M) angeordnet sind.

10. Statoranordnung nach einem der Ansprüche 6 bis 9, wobei jeder Messschaltungszweig (36) zwei elektrische Anschlüsse (42) aufweist, wobei zumindest einer der Anschlüsse (42) an einer Stirnseite des Statorkörpers (32) angeordnet ist.

11. Statoranordnung nach einem der vorhergehenden Ansprüche, wobei die Temperaturerfassungseinrichtung (35) mehrere Messleiterbahnen (37) aufweist, die elektrisch in Parallelschaltung und/oder in Reihenschaltung angeordnet sind.

12. Statoranordnung nach einem der vorhergehenden Ansprüche, wobei die wenigstens eine Messleiterbahn (37) an einer Stirnseite des Statorkörpers (32) und/oder in einer Wicklungsnut (27) des Statorkörpers (32) angeordnet ist.

13. Statoranordnung nach einem der vorhergehenden Ansprüche, wobei die wenigstens eine Messleiterbahn (37) einen mäanderförmigen Leiterbahnabschnitt (43) aufweist.

14. Verfahren zur Herstellung einer Statoranordnung (20) für eine elektrische Maschine, umfassend:
- Bereitstellen eines Statorkerns (21) eines Statorkörpers (32), wobei der Statorkörper (32) zum Anbringen wenigstens einer Statorwicklung (29) eingerichtet ist,
- Herstellen einer elektrisch isolierende Mantelschicht (31), die den Statorkern (21) des Statorkörpers (32) teilweise oder vollständig umschließt, und
- Herstellen wenigstens einer Messleiterbahn (37) mit einem temperaturabhängigen Widerstand (RT) einer Temperaturermittlungseinrichtung (35), wobei die wenigstens eine Messleiterbahn (37) auf oder in der Mantelschicht (31) angeordnet ist.

15. Verfahren nach Anspruch 14, wobei die Mantelschicht (31) und die wenigstens eine Messleiterbahn (37) durch ein MID-Verfahren hergestellt werden.
